# EUROPEAN PATENT SPECIFICATION

(11) **EP 1 103 529 B1**
(45) Date of publication and mention of the grant of the patent: **03.09.2008**
(21) Application number: 99123342.0
(22) Date of filing: 23.11.1999
(51) Int. Cl.: C03C 8/14, C23D 5/02

(54) **Enamelling of aluminium alloys surfaces**
Emaillierung von Aluminiumlegierungsoberflächen
Emaillage de surfaces d'alliages d'aluminium

(43) Date of publication of application: 30.05.2001
(73) Proprietor: Pemco Brugge N.V., 8000 Brugge (BE)
(72) Inventor: Leveaux, Marc, 59110 La Madeleine (FR); Lips, Koen, 9031 Gent (BE); Crevits, Nancy, 8380 Dudzele (BE); Humez, Sebastien, 59800 Lille (FR)
(74) Representative: Jönsson, Hans-Peter

(56) References cited:
- EP-A- 0 453 897
- EP-A- 0 522 401
- EP-A- 0 931 772
- DATABASE WPI Section Ch, Week 199148 Derwent Publications Ltd., London, GB; Class L03, AN 1991-351536 XP002135864 & SU 1 616 865 A (ERMOLENKO N N), 30 December 1990 (1990-12-30)

## Description

The present invention relates to a process for the enamelling of aluminium alloy surfaces containing a relatively high amount of Mg and/or Cu.

Aluminium alloys with relative high Mg and Cu contents tend to be susceptible for spalling. Spalling in the sense of the invention means flaking or chipping off of the vitreous enamel layer from the aluminium substrate after firing, thereby destroying the aesthetic and/or functional qualities of the enamelled surface. The Standard ISO/DIS 13805 (1998) describes a method to test the spalling resistance of an enamelled aluminium surface. According to the prior art it is known that aluminium alloys with amounts of Mg > 50 ppm and/or Cu > 0.2 % by weight are certainly susceptible for spalling due to the inhibition of the adherence.

Concerning magnesium in aluminium alloys it is known that this metal that is not tied up into Mg₂Si precipitates, migrates to the surface during the firing of a vitreous enamel layer applied thereto, and later forms MgO. Because of the fact that MgO is hardly soluble in aluminium enamels, an intermediate layer is formed between the aluminium alloy surface and the enamel layer, when the diffusion of magnesium occurs during firing. After diffusing, magnesium can easily be oxidized due to the contact with oxygen and high temperatures during the firing. The change Mg+1/2O₂ → MgO induces an increase of the volume( big change in the lattice parameter). This intermediate layer, with high MgO content, almost not wettable by the vitreous enamel and slightly growing finally provides a very poor adherence between the aluminium alloy and the enamel layer. During weathering or exposure to chemical attack or thermal changes of such enamelled surfaces, the intermediate layer corrodes, induces spalling through stresses at the interface.

In order to improve the adherence of vitreous enamel layers on aluminium alloy surfaces that are susceptible for spalling, the following methods have been proposed:
- Chromatation of the aluminium alloy surface before enamelling (at the present, this is the most used technique)
- Anodisation of the aluminium alloy surface before enamelling as is described in US-A-3,222,266, EP 0,611,834 A1 and EP 0,648,863 B1
- Avoiding migration of Mg to the surface by tying up all the Mg in the aluminium alloy as Mg₂Si : GB-A-840,469 and US-A-2,932,584
- Adding iron oxide to the vitreous enamelslip (during milling) to improve the adherence : EP 0,686,609 A1.

SU 1616865 A discloses addition of CuO for low melting enamel.

EP 0 522 401 A1 discloses an enamel composition comprising CuO powder.

This is also disclosed by EP 0 453 897 A1 and EP 0 931 772 A1.

It has been found that none of the prior art references is suitable to provide sufficient adherence of the vitreous enamel layer to an aluminium alloy surface containing an amount of Mg > 50 ppm, and/or an amount of Cu > 0.2 % by weight.

The aforementioned problem has been solved according to the present invention in a first embodiment by a process for the enameling of aluminum alloy surfaces, wherein the Mg-content of the alloy is at least 50 ppm and/or wherein the Cu-content of the aluminum alloy is at least 0.2 % by weight, characterized by the use of a vitreous enamel containing **a** CuO **content in the range of 0.5 to 20 % by weight.**

It has been found that the addition of CuO either directly into the composition of a standard vitreous enamel frit suitable for enamelling on aluminium, or in the vitreous enamel slip prepared using a standard frit suitable for enamelling on aluminium improves the adherence between the aluminium alloy surface and the vitreous enamel after firing.

According to the present invention it becomes possible to enamel aluminium alloys with higher contents of Mg and/or Cu without necessity of a special pre-treatment of the surface (chromatation, anodisation), and which are not required to have a special ratio of Mg/Si in order to precipitate Mg completely. It was also demonstrated that the addition of CuO is much more powerful than the addition of iron oxide as described in prior art EP 0 686 609 A1. As can be seen from the examples prepared during the research for the present invention there exist aluminium alloy surfaces which cannot be successful enamelled with a standard vitreous enamel slip that only contains 1-10 % by weight iron oxides as milling agent, but which can be successfully enamelled with a vitreous enamel slip made of frits containing CuO and/or by the use of CuO as milling addition.

Using CuO in the sense of the present invention includes the use of any compounds which may result in the formation of CuO in particular during the firing of the frit. Thus, the present invention is not limited to the direct addition of CuO as such.

According to the present invention, it is now possible to enamel aluminium or aluminium alloy surfaces wherein the surface layer is an aluminium cast alloy, an aluminium wrought alloy, a hot dip aluminium alloy or a cladded aluminium alloy. Said material may be connected to other substrates.

In a preferred embodiment the present inventions allows to enamel surfaces as defined above wherein the Mg-content of the aluminium alloy is larger than 50 ppm, in particular larger than 100 ppm. An upper limit of the content of Mg is of no importance.

The amount of copper in the aluminum alloy surface may be for example at least 0.2 % by weight, in particular at least 0.4 % by weight. The present invention now allows to enamel such surfaces.

Although the present invention allows enamelling of aluminium alloy surfaces as defined above without specific pretreatment, it goes without saying that a pretreatment of the surface as is done in the prior art may be used according to the present invention. A simplified pretreatment of the surface may enclose decreasing and/or pickling only.

The amount of CuO in the vitreous enamel may be varied in a wide range. A preferred range of the content of CuO in the vitreous enamel composition as applied to the substrate is 2 to 10 % by weight.

In addition to CuO, other metal oxides may be used to further increase the adherence. In particular oxides of Ni, Fe, Co, Mn, Sb, Bi and Cr as well Ti may be used. In this respect, the use of 0.5 to 10 % by weight of one or more of the oxides of Ni, Fe, Co, Mn, Sb, Bi and Cr is particularly preferred. On the other hand, the amount of TiO₂ in addition to CuO in the vitreous enamels used according to the present invention may vary in a range of 10 to 40 % by weight.

It was found that the addition of said additional oxides of Ti, Fe, Mn, Ni, Co, Sb, Bi and Cr also improves the adherence, but much less than CuO. Thus, the combined addition of CuO and one or more of the oxides of Ti, Fe, Mn, Ni, Co, Sb, Bi and Cr further improves the adherence of the vitreous enamel on aluminium alloy surfaces.

There are in principle different ways in adding the oxides of Cu, Ti, Ni, Fe, Co, Mn, Sb, Bi and Cr to the vitreous enamel. In a first preferred embodiment those oxides are added partly or completely to the vitreous enamel frit during the melting of the frit composition. Thus, said oxides will be added to the other components and melted together.

In a further preferred embodiment the oxides may be added partly or completely during the vitreous enamel slip preparation, in particular during milling.

Due to the addition of CuO and one or more of the oxides of Ti, Fe, Mn, Ni, Co, Sb, Bi and Cr to the frit or the slip, it is of course not possible to achieve white or bright colors in a single layer coating, because the resulting vitreous enamel looks at least dark-grey after firing. However, white or bright colors can be achieved in a multi layer coating as is per se known form EP 0 556 456 A1. Said two coat/one fire technique, which is often used for steel enamelling, can successfully be used in the present field of enamelling aluminium surfaces. The adherence promoting oxides are incorporated into the ground enamel layer and on top of this layer, a second white or bright colored enamel layer is applied. Both layers are first dried and then fired together.

The prior art of enamelling high strength aluminium alloys requires chromatation or anodisation. Using the method according to the present invention however makes it possible to enamel the same alloys without such an expensive and dangerous (for chromatation) pre-treatment.

For those who are presently enamelling low strength aluminium alloys with low Mg and/or Cu contents, using the method according to the present invention makes it possible to change for higher strength aluminium alloys. By doing this, one can obtain the same strength of a certain piece of ware with a thinner sheet thickness, which means reduction of weight, reduction of volume and reduction of price.

For producers of aluminium alloys themselves who do have problems obtaining the low limit of 50 ppm Mg in order to obtain good adherence, using the method according to the present invention it makes possible to change the tolerances for the maximum magnesium content. In that way, it will make the production easier to control, more safe and less expensive.

The invention now will be illustrated by the non-limiting examples.

### Examples:

The followings table give the spalling test results (ISO/DIS 13805) of enamelled aluminium alloy surfaces.

The used wrought aluminium alloys are commercial available at Hoogovens Aluminium N.V. (Belgium, Duffel).

**Table 1:**

| Alloy | 1050 * | 3003 * | 4917^{•} | 5005^{•} | 5555^{•} | 6082* | 6061 * |
|---|---|---|---|---|---|---|---|
| % Mg | <0.01 | <0.01 | 0.04 | 0.8 | 2.45 | 1.01 | 0.47 |
| % Cu | 0.07 | 0.01 | 0.2 | | 0.4 | 0.01 | 0.06 |
| %Mn | 0.2 | 0.9 | 1.3 | 0.01 | 1.0 | 0.2 | 0.5 |
| %Si | 1.0 | 0.2 | 1.4 | 0.1 | 1.0 | 0.1 | 0.9 |

| | | | | | | | |
|---|---|---|---|---|---|---|---|
| *: Aluminium Alloys according to the International Registration Record. ^{•}: Aluminium Alloys according to the internal Hoogovens Aluminium designation | | | | | | | |

**Table 2:**

| The basic composition of the vitreous enamel of the example is in % by weight: | | | | | | | | |
|---|---|---|---|---|---|---|---|---|
| | Al₂O₃ | K₂O | Li₂O | Na₂O | P₂O₅ | SiO₂ | TiO₂ | V₂O₅ |
| Enamel A | 1 | 12 | 1 | 20 | 2 | 33 | 22 | 9 |

### Examples 1 and 2, Comparative examples 1 to 3:

**Table 3:**

| The addition of CuO (Examples 1 and 2) during slip preparation improves the adherence. The examples are based on enamel composition A. | | | | | | | | |
|---|---|---|---|---|---|---|---|---|
| (as milling agent added to the frits with basic comp) | | | | | | | | |
| Examples | Alloy | 1050 | 3003 | 4917 | 5005 | 5555 | 6082 | 6061 |
| Comp.Ex .1 | Basic comp. | VG | VG | BAD | ----- | ----- | ----- | Bad |
| Comp.Ex .2 | + 6 % Fe₂O₃ | VG | VG | BAD | BAD | VG | G | BAD |
| Comp.Ex .3 | +12% Fe₂O₃ | VG | G | BAD | BAD | VG | G | BAD |
| Example 1 | +2% CuO | VG | VG | G | G | G | G | G |
| Example 2 | +5% CuO | VG | VG | G | VG | VG | VG | G |

### Examples 3 to 6, Comparative example 1:

**Table 4:**

| The addition of CuO (Examples 3 to 6) during the frit production improves the adherence. The examples are based on enamel composition A. | | | | | | | | |
|---|---|---|---|---|---|---|---|---|
| (frit analysis - changes in regard to the frit with basic comp.) | | | | | | | | |
| Example, | Alloy, | 1050 | 3003 | 4917 | 5005 | 5555 | 6082 | 6061 |
| Comp.Ex. 1 | Basic comp. | VG | VG | BAD | ----- | ----- | ----- | Bad |
| Example 3 | + 2.5%* CuO | VG | VG | G | VG | G | G | G |
| Example 4 | + 3.25%* CuO | VG | VG | G | VG | VG | VG | G |
| Example 5 | + 4%* CuO | VG | VG | G | VG | VG | VG | G |
| Example 6 | + 5%* CuO | VG | VG | VG | VG | VG | VG | VG |

| | | | | | | | | |
|---|---|---|---|---|---|---|---|---|
| * % = % by weight Adherence characterization : - VG = very good = (no spalling) - G = good = (spalling < 1mm) - Bad = ( surface completely spalled off) - -------: enamel chipped off completely after firing | | | | | | | | |

## Claims

1. Process for the enameling of aluminum alloy surfaces, wherein the Mg-content of the alloy is at least 50 ppm and/or wherein the Cu-content of the aluminum alloy is at least 0.2 % by weight, **characterized by** the use of a vitreous enamel containing **a** CuO **content in the range of 0.5 to 20 % by weight.**

2. Process according to claim 1, wherein the surface layer is an aluminum cast alloy, an aluminum wrought alloy, a hot dip aluminum alloy or a cladded aluminum alloy.

3. Process according to claim 1 or 2, wherein the Mg-content of the aluminum alloy is at least 100 ppm.

4. Process according to claim 1 or 2, wherein the Cu-content of the aluminum alloy surface is at least 0.4 % by weight.

5. Process according to one of claims 1 to 4, **characterized by** a pretreatment of the surface encloses degreasing and/or pickling.

6. Process according to one of claims 1 to 5, **characterized by** conversion treating the aluminum alloy surface prior to the enameling.

7. Process according to one of claims 1 to 6, **characterized by** using a vitreous enamel containing a CuO content in the range of 0.5 to 20 % by weight, in particular 2 to 10 % by weight.

8. Process according to one of claims 1 to 7 **characterized by** adding CuO partly or completely during the melting of the frit.

9. Process according to one of claims 1 to 7 **characterized by** adding CuO partly or completely during the enamel slip preparation.

10. Process according to one of claims 1 to 9, **characterized by** using a vitreous enamel containing in addition to CuO furthermore from 0.5 to 10 % by weight of one or more of the oxides of Ni, Fe, Co, Mn, Sb, Bi and Cr.

11. Process according to one of claims 1 to 10, **characterized by** using a vitreous enamel containing in addition to CuO furthermore from 10 to 40 % by weight of TiO₂.

12. Process according to claims 1 to 11, wherein the oxides of Ti, Ni, Fe, Co, Mn, Sb, Bi and Cr partly or completely are added to the vitreous enamel frit during melting of the frit composition.

13. Process according to claims 1 to 12, wherein the oxides of Ti, Ni, Fe, Co, Mn, Sb, Bi and Cr partly or completely are added to the vitreous enamel slip during slip preparation.

14. Process according to claims 1 to 13 for the preparation of white and dark vitreous enamel layers as a single layer coating or as the first layer of a multi-layer coating, in a thickness of the layer being preferably in the range of 0.5 and 100 µm respectively.

## Patentansprüche

1. Verfahren zum Emaillieren von Oberflächen von Aluminiumlegierungen, wobei der Mg-Gehalt der Legierung wenigstens 50 ppm beträgt und/oder wobei der Cu-Gehalt der Aluminiumlegierung wenigstens 0,2 Gew.-% beträgt, **dadurch gekennzeichnet, dass** eine Glasemaille, die einen CuO-Gehalt im Bereich von 0,5 bis 20 Gew.-% hat, verwendet wird.

2. Verfahren gemäß Anspruch 1, wobei die Oberflächenschicht aus einer Aluminiumgusslegierung, einer Aluminiumknetlegierung, einer durch Feueraluminierung entstandenen Legierung oder einer durch Aluminiumkaschierung entstandenen Legierung.

3. Verfahren gemäß Anspruch 1 oder 2, wobei der Mg-Gehalt der Aluminiumlegierung wenigstens 100 ppm beträgt.

4. Verfahren gemäß Anspruch 1 oder 2, wobei der Cu-Gehalt der Oberfläche aus Aluminiumlegierung wenigstens 0,4 Gew.-% beträgt.

5. Verfahren gemäß einem der Ansprüche 1 bis 4, **dadurch gekennzeichnet, dass** eine Vorbehandlung der Oberfläche eine Entfettung und/oder Beizung umfasst.

6. Verfahren gemäß einem der Ansprüche 1 bis 5, **dadurch gekennzeichnet, dass** die Oberfläche aus Aluminiumlegierung vor dem Emaillieren einer Passivierungsbehandlung unterzogen wird.

7. Verfahren gemäß einem der Ansprüche 1 bis 6, **dadurch gekennzeichnet, dass** eine Glasemaille verwendet wird, die einen CuO-Gehalt im Bereich von 2 bis 10 Gew.-% hat.

8. Verfahren gemäß einem der Ansprüche 1 bis 7, **dadurch gekennzeichnet, dass** CuO teilweise oder vollständig während des Schmelzens der Fritte hinzugefügt wird.

9. Verfahren gemäß einem der Ansprüche 1 bis 7, **dadurch gekennzeichnet, dass** CuO teilweise oder vollständig während der Herstellung des Emailleschlickers hinzugefügt wird.

10. Verfahren gemäß einem der Ansprüche 1 bis 9, **dadurch gekennzeichnet, dass** eine Glasemaille verwendet wird, die neben CuO weiterhin 0,5 bis 10 Gew.-% eines oder mehrerer der Oxide von Ni, Fe, Co, Mn, Sb, Bi und Cr enthält.

11. Verfahren gemäß einem der Ansprüche 1 bis 10, **dadurch gekennzeichnet, dass** eine Glasemaille verwendet wird, die neben CuO weiterhin 10 bis 40 Gew.-% TiO₂ enthält.

12. Verfahren gemäß den Ansprüchen 1 bis 11, wobei die Oxide von Ti, Ni, Fe, Co, Mn, Sb, Bi und Cr teilweise oder vollständig während des Schmelzens der Frittenzusammensetzung zu der Glasemaillefritte gegeben werden.

13. Verfahren gemäß den Ansprüchen 1 bis 12, wobei die Oxide von Ti, Ni, Fe, Co, Mn, Sb, Bi und Cr teilweise oder vollständig während der Herstellung des Schlickers zu dem Glasemailleschlicker gegeben werden.

14. Verfahren gemäß den Ansprüchen 1 bis 13 zur Herstellung von weißen und dunklen Glasemailleschichten als einschichtige Beschichtung oder als erste Schicht einer mehrschichtigen Beschichtung, wobei die Dicke der Schicht vorzugsweise im Bereich von 0,5 bis 100 µm liegt.

## Revendications

1. Procédé d'émaillage de surfaces en alliage d'aluminium, lequel alliage d'aluminium contient au moins 50 ppm de magnésium et au moins 0,2 % de cuivre, **caractérisé en ce qu'**on utilise un émail vitreux qui contient de l'oxyde de cuivre CuO en une proportion pondérale de 0,5 à 20 %.

2. Procédé conforme à la revendication 1, dans lequel la couche de surface est en alliage d'aluminium coulé, en alliage d'aluminium corroyé, en alliage d'aluminium déposé en bain fondu, ou en alliage d'aluminium plaqué.

3. Procédé conforme à la revendication 1 ou 2, dans lequel la teneur en magnésium de l'alliage d'aluminium vaut au moins 100 ppm.

4. Procédé conforme à la revendication 1 ou 2, dans lequel la teneur en cuivre de la surface en alliage d'aluminium vaut au moins 0,4 % en poids.

5. Procédé conforme à l'une des revendications 1 à 4, **caractérisé en ce qu'**on soumet la surface à un traitement préalable qui comporte un décapage et/ou un dégraissage

6. Procédé conforme à l'une des revendications 1 à 5, **caractérisé en ce qu'**on soumet la surface en alliage d'aluminium à un traitement de conversion avant d'en effectuer l'émaillage.

7. Procédé conforme à l'une des revendications 1 à 6, **caractérisé en ce qu'**on utilise un émail vitreux qui contient de l'oxyde de cuivre CuO en une proportion pondérale de 2 à 10 %.

8. Procédé conforme à l'une des revendications 1 à 7, **caractérisé en ce qu'**on ajoute une partie ou la totalité de l'oxyde de cuivre CuO au cours de la fusion de la fritte.

9. Procédé conforme à l'une des revendications 1 à 7, **caractérisé en ce qu'**on ajoute une partie ou la totalité de l'oxyde de cuivre CuO au cours de la préparation de l'émail liquide.

10. Procédé conforme à l'une des revendications 1 à 9, **caractérisé en ce qu'**on utilise un émail vitreux qui contient, en plus de l'oxyde de cuivre CuO, de 0,5 à 10 % en poids de l'un ou plusieurs des oxydes de nickel, de fer, de cobalt, de manganèse, d'antimoine, de bismuth ou de chrome.

11. Procédé conforme à l'une des revendications 1 à 10, **caractérisé en ce qu'**on utilise un émail vitreux qui contient, en plus de l'oxyde de cuivre CuO, de 10 à 40 % en poids d'oxyde de titane TiO₂.

12. Procédé conforme à l'une des revendications 1 à 11, **caractérisé en ce qu'**on ajoute une partie ou la totalité des oxydes de titane, de nickel, de fer, de cobalt, de manganèse, d'antimoine, de bismuth ou de chrome à la fritte d'émail vitreux au cours de la fusion de la composition de fritte.

13. Procédé conforme à l'une des revendications 1 à 12, **caractérisé en ce qu'**on ajoute une partie ou la totalité des oxydes de titane, de nickel, de fer, de cobalt, de manganèse, d'antimoine, de bismuth ou de chrome à l'émail liquide vitreux au cours de la préparetion de l'émail liquide.

14. Procédé, conforme à l'une des revendications 1 à 13, de préparation d'une couche d'émail vitreux de couleur blanche ou de couleur sombre, en tant que revêtement à couche unique ou en tant que première couche d'un revêtement à couches multiples, l'épaisseur de la couche se situant de préférence dans l'intervalle allant de 0,5 à 100 mm, respectivement.
